# NEW EUROPEAN PATENT SPECIFICATION

(11) **EP 0 442 325 B2**
(45) Date of publication and mention of the opposition decision: **22.10.1997**
(45) Mention of the grant of the patent: 15.03.1995
(21) Application number: 91101257.3
(22) Date of filing: 31.01.1991
(51) Int. Cl.: C09C 1/30, C09D 5/04, C09D 167/00, C09D 7/02

(54) **Si02-Flatting agent, process for its production and its use**
Si02-Mattierungsmittel, Verfahren zu seiner Herstellung und seine Verwendung
Agent de matité à base de silice, procédé de fabrication et d'utilisation

(30) Priority: 14.02.1990 DE 4004468; 15.10.1990 DE 4032619
(43) Date of publication of application: 21.08.1991
(73) Proprietor: Grace GmbH, D-22844 Norderstedt (DE)
(72) Inventor: Luers, Georg, W-6525 Westhofen (DE); Zeh, Heiko, W-6108 Weiterstadt (DE); Scheuren, Gerd W., Dr., W-6520 Worms (DE)
(74) Representative: UEXKÜLL & STOLBERG

(56) References cited:
- CH-A- 362 059
- DD-A- 69 417
- DE-A- 2 521 361
- DE-B- 1 567 459
- DE-B- 1 592 865
- DE-B- 1 769 033
- DE-B- 2 524 309
- DE-C- 1 006 100
- GB-A- 1 395 700
- US-A- 3 436 241
- US-A- 3 607 337
- US-A- 4 097 302
- US-A- 4 173 491
- Cray Valley Products Ltd GB, Technical Service Report no 271, March 1984 "The Super Gelkyds Resins"
- Cray Valley Products Ltd GB, Resinotes 31, 1979, "Introducing the Super Gelkyds"
- Degussa AG, DE, "Schriftenreihe Pigmente", no33, 3rd ed., January 1988

## Description

### FIELD OF THE INVENTION

The invention relates to a universally applicable Si0₂-flatting agent, a process for its production and its use in thixotropic and non-thixotropic paints and lacquers.

### BACKGROUND OF THE INVENTION

The problem with thixotropic paints and lacquers based on polyamide-modified alkyd resins (see e.g. U.S. patent 2 663 649) is that the components additionally present in the lacquer; particularly hydroxyl group-containing solvents such as, for example, alcohols, glycols and some organic paint pigments (e.g. phthalocyanine blue, Hansa yellow and Bordeaux red), have a negative effect on the thixotropy However, Si0₂-flatting agents also have a similar effect

Immediately after being produced, fine-particled Si0₂-flatting agents can be easily de-agglomerated into individual particles with the application of low shearing forces when incorporated into lacquer. This behaviour is desirable because remaining agglomerates lead to clearly visible specks in the applied lacquer film. However, if fine-particled Si0₂-flatting agents are subjected to a pressure, more solid agglomeration can result. This effect is increased if the pressure is exerted over a lengthy period of time. This can cause the good dispersibility of a product which initially has excellent dispersibility, to deteriorate during storage because of stress such as can occur during storage and transportation, whereupon said product is judged unacceptable by the user.

In thixotropic paints and lacquers, because of their gel-like properties, no sedimentation of flatting agents or pigment particles is observed. The particles remain in their position and cannot form a hard, non-dispersible sediment during storage. Exposure to shearing forces causes the viscosity of the system to fall substantially and the particles begin to settle. The particular feature of a thixotropic paint is that the viscosity is very rapidly restored as soon as the mechanical stress ceases. After a short time the paint once again has its original gel-like consistency, which prevents a further settling of the particles.

In a non-thixotropic paint, however, the situation is completely different, because here the Si0₂-flatting agent particles settle and form a hard sediment. It is very difficult, and in many cases impossible, to redisperse this sediment into the individual particles again with the equipment common in the paint and lacquer industry.

The formation of a hard sediment can be prevented by coating the flatting agent particles with wax. DE-PS 1 006 100 and DE-AS 1 592 865 describe how the Si0₂-flatting agent particles can be coated with wax and which waxes can be used.

In this context GB-A 1,395,700 is to be mentioned which discloses a process for the treatment of particulate pigments (e.g. silica) which comprises incorporating with the pigments an amount of 0.02 to 60 wt.% of 1,2 diols having from 11 to 30 carbon atoms in their main chain. The treatment serves to break up pigment particle agglomerates and thus improve dispersibility as well as hiding power and gloss. The pigments can be incorporated in paints.

This reference mainly relates to titanium dioxide and proposes to provide the pigment particles with an inorganic coating before the polyols are added. However, this reference does not explicitly relate to flatting agents and does not at all address the problems with thixotropic paints and lacquers based on polyamide-modified alkyd resins when using Si0₂-flatting agents.

Further it is disclosed that the product is a useful predispersed pigment composition, if a relatively high proportion of 1,2 diol is incorporated with a pigment. In general 25 to 60 % by weight of a 1,2 diol will be needed in order to yield such a composition. Advantageously a lubricant is incorporated with the pigment in an amount of about 5% by weight on a pigment basis. Useful lubricants are magnesium stearate, zinc stearate, aluminium stearate, stearic acid, polyethylene wax and paraffin oil or mixtures thereof. Thus GB-A 1,395,700 discloses predispersed pigment compositions consisting of 100 parts by weight pigment, 25 to 60 parts by weight 1,2 diol and 5 parts by weight lubricant like polyethylene wax, the minimum amount of 1,2 diol based on the total composition being 19.2 % by weight.

### OBJECTS OF THE INVENTION

Therefore it is an object of the invention to provide a Si0₂-flatting agent with the least possible negative effect or without any negative effect on the thixotropic behaviour of un-flatted thixotropic paints and lacquers based on polyamide-modified alkyd resins.

It is a further object of the invention to provide a Si0₂-flatting agent which still has good dispersibility even after lenghty storage, particularly under pressure

It is also an object of the invention to provide a Si0₂-flatting agent which does not lead to the formation of a hard sediment with non-thixotropic paints and lacquers.

It is an additional object of the invention to provide a Si0₂-flattingagent which is universally applicable

### SUMMARY OF THE INVENTION

The invention is directed to the use of a Si0₂-flatting agent consisting of Si0₂ and 1 to 25% by weight polyol for the preparation of thixotropic paints and lacquers based on polyamide-modified alkyd resins.

Another subject of the invention is a Si0₂-flatting agent for thixotropic paints and lacquers based on polyamide-modified alkyd resins which consists of Si0₂, 1 to 15 % by weight liquid polyol with 2° to 6 OH-groups and 2 to 100 carbon atoms, and 1 to 25% by weight wax.

Preferred embodiments and advantages of the invention will become apparent from the following detailed description of the invention and the subclaims.

### DETAILLED DESCRIPTION OF THE INVENTION

It was surprisingly found that the negative effect of Si0₂-based flatting agents on the thixotropy of paints and lacquers based on thixotropic polyamide-modified alkyd resins can be greatly reduced, or eliminated, by the co-use of polyhydric alcohols. The affinity between the Si0₂ surface and the polyol is so great that even when the Si0₂ and the polyol are added separately to thixotropic paints and lacquers based on alkyd resins the polyol molecules are adsorbed by the Si0₂ surface. In other words, the modification according to the invention of Si0₂-flatting agents consists in impregnating or coating the Si0₂ surface with polyols. The realization that polyols eliminate the negative effect of the hydroxyl groups on the Si0₂ surface is particularly surprising because alcohols and glycols in particular are known as substances which greatly impair the thixotropy of polyamide-modified alkyd resins. For example, a manufacturer of thixotropic polyamide- modified alkyd resins expressly points out that hydroxyl groups, as present in alcohols and glycols, completely destroy the thixotropic structure.

It was further surprisingly found that the good dispersibility of the fine-particled Si0₂-flatting agents remains even during storage, and particularly during storage under pressure, if the Si0₂ surface is impregnated with a polyol.

Finally, it was surprisingly found that the impregnation or coating of the Si0₂-flatting agent surface with polyols according to the invention is effective not only with pure but also with wax-coated flatting agents. This means, in other words, that the polyol applied according to the invention does not impair the effectiveness of the wax in terms of preventing the flatting-agent particles from settling and forming a hard sediment. Vice versa, the wax obviously does not have a negative effect on the thixotropy of thixotropic paints and lacquers, or on the improvement in dispersibility of Sio₂-flatting agents that can be achieved by polyol impregnation after lengthy storage. The preferred Si0₂-flatting agent according to the invention can thus be applied universally not only in thixotropic but also in non-thixotropic paints and lacquers.

Alcohols of higher valence are suitable for the treatment of the Si0₂ surface according to the invention, particularly di- to hexahydric alcohols with, e.g., 2 to 100 carbon atoms, in which the carbon chains can be linear or branched and can be interrupted by any number of oxygen atoms (C-O-C groups = ethers). The OH-groups can be situated at any position. Mixtures of the named polyols can, of course, also be used.

Examples of polyols which are suitable according to the invention include glycerin, ethylene glycol, diethylene glycol, polyethylene glycols, sorbitol, trimethylolpropane, di- trimethylolpropane, ethoxylated trimethylolpropanes, pentaerythritol and ethoxylated pentaerythritols.

With reference to waxes suitable according to the invention, reference is made to the aforementioned DE-PS 1 006 100 and DE-AS 1 592 865. Microcrystalline hard waxes, polyethylene waxes and partially oxidized polyethylene waxes, which have proved to be well suited, are mentioned in particular.

Si0₂-flatting agents are in most cases silica gels or precipitated silicic acids (also called precipitated silica). Pyrogenic silicic acids (or pyrogenic silicas) in the usual form are not used as flatting agents; there is, however, a form produced by secondary agglomeration which is likewise used as a flatting agent. Suitable are also dialytic silicic acids (or dialytic silicas). The particle size and particle-size distribution of the Si0₂-flatting agent lie within the usual ranges known to the expert.

The flatting agent according to the invention is prepared by bringing together Si0₂ with polyol and optionally wax. This is preferably done by micronizing the Si0₂ in a jet-mill or a mechanical mill, followed where appropriate by classification, and adding the polyol and optionally the wax (in melted form or as a powder) at the same time as the Si0₂. Another possibility is to spray-dry a suspension of Si0₂ in an aqueous polyol solution, to impregnate the resulting polyol-impregnated Si0₂, if desired, in the conventional manner with wax (see e.g. DE-PS 1 006 100 and DE-AS 1 592 865), and to adjust the Si0₂, now impregnated with polyol and optionally wax, to the suitable particle-size distribution by air-classification or jet-milling. Alternatively, a suspension of SiO₂, wax emulsion and polyol can be spraydried. The Si0₂ can also already be impregnated with polyol before drying by introducing polyol into the liquid phase surrounding the hydrogel or by adding polyol to the wash-water during washing (e.g. of the hydrogel in the case of silica gel) or impregnating the Si0₂ even earlier in the hydrosol state, by adding the polyol to the water glass or to the diluted sulphuric acid during the precipitation of the Si0₂. The polyol-treated Si0₂ which is obtained according to one of these methods can then be impregnated with wax as described previously and adjusted to the suitable particle size distribution.

Alternatively, Si0₂ or wax-impregnated Si0₂ and polyol can be incorporated into the paint or lacquer as separate components.

The advantageous effect of the modification of Si0₂-flatting agents with polyols according to the invention is probably due to the fact that the OH-groups of the Si0₂ surface are masked by addition and bonding via hydrogen-bridge bonds. It is decisive here for several OH-groups or ether groups to be present per molecule to surpass the necessary adhesion vis-a-vis other polar molecules, e.g. water. Compared with the known esterification of OH groups on Si0₂ surfaces with alcohols, which is connected with a distinct enthalpy change, the difference according to the invention is that the modification of Si0₂-flatting agents with polyols takes place spontaneously but without noticeable enthalpy change. Accordingly, the production of the Si0₂-flatting agent according to the invention or the modification with polyol takes place basically below the temperature at which an esterification would take place, i.e. generally below 150°C, preferably below 100°C and especially at ambient temperature or an only slightly higher temperature.

Generally, 1 to 25% by weight polyol and in addition preferably 1 to 25% by weight wax, both relative to the weight of the Si0₂-flatting agent, are required for the modification of Si0₂-flatting agents according to the invention. Amounts of 3 to 15% by weight polyol and 3 to 10% by weight wax are preferred.

Practice of the invention will become further apparent from the following non-limiting examples.

### Example 1 a

A Si02-flatting agent with an average particle size of 5 µm (measured with a Coulter Counter), a BET surface of 400 m²/g and a pore volume (both determined by nitrogen adsorption) of 1.75 ml/g was dispersed using a so-called dissolver (a high-speed stirring device with high shearing forces frequently used in the paint and lacquer industry for the dispersion of pigments and fillers) into a thixotropic lacquer containing a polyamide-modified thixotropic alkyd resin as its main component. The composition of the lacquer is given in the following table. The concentration of the flatting agent, relative to the solids content of the lacquer, was 9% by weight. The flatted lacquer was stored for 24 hours at 20°C and then the viscosity was determined with the Haake viscosimeter (Haake RV3 Rotovisko, measuring head 500, spindle MV1). The measurement was carried out at 20°C. A flow curve was determined from 0 to 32 rpm with a rotation-frequency change of 25 rpm/min/min. The viscosity was read off at 8 rpm from the curve with an increasing frequency of rotation. The results obtained are reproduced in Table 1.

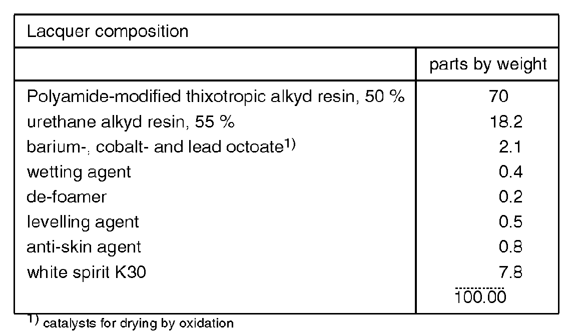

After six weeks storage of the lacquer at room temperature no sediment was observed.

### Example 1

The Si0₂-flatting agent from Example 1a was impregnated with a wax by adding the wax into the jet mill at the same time as the Si0₂. The thus impregnated flatting agent, containing 10% by weight wax, was incorporated into the same lacquer as in Example 1a and tested as described there. The results are likewise reproduced in Table 1.

### Example 2

The lacquer used in Example 1a was treated as in Example 1, but without the addition of a flatting agent. The corresponding tests were carried out with this lacquer and the results are likewise reproduced in Table 1.

### Example 3

The Si0₂-flatting agent used in Example 1 a was already impregnated with a polyethylene glycol (molecular weight 400) during the micronization in the jet-mill, the polyethylene glycol being added into the jet-mill at the same time as the Si0₂. The polyethylene glycol concentration in the flatting agent was 8.5% by weight The thus impregnated flatting agent was incorporated into the same lacquer as in Example 1 a and tested as described there. The concentration of the flatting agent, relative to the solids content of the lacquer, was 9% by weight. The results are again reproduced in Table 1.

### Example 4 a

The Si0₂-flatting agent used in Example 1awas introduced into a non-thixotropic lacquer based on a nitrocellulose resin The composition of the lacquer is given in the following table. The lacquer containing the flatting agent was kept for 6 weeks in a glass cylinder before the hardness of a sediment which may have formed was evaluated. The hardness was determined with a glass rod. The'resistance felt on moving the sediment is the subjective criterion for evaluating the hardness.

The untreated flatting agent used in this example did form a hard sediment.

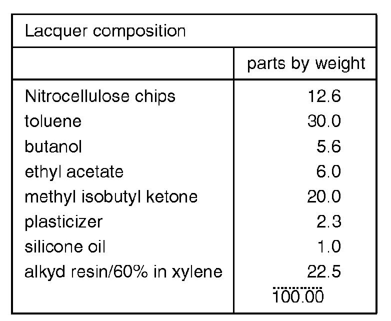

### Example 4b

Instead of the non-coated flatting agent from Example 1a, the wax-impregnated flatting agent from Example 1b was tested in the manner described in Example 4a with reference to sedimentation behaviour. In contrast to Example 4a, the wax-impregnated flatting agent led to a very soft and easily redispersible deposit.

### Example 5

Instead of the non-coated flatting agent from Example 1a, the polyol-impregnated flatting agent according to Example 3 was tested with reference to sedimentation behaviour as described in Example 4a. The Si0₂-flatting agent impregnated with 8.5% by weight polyethylene glycol led to the formation of a hard deposit.

### Example 6

The Si0₂-flatting agent used in Example 1 a was already impregnated with a polyethylene glycol (molecular weight 400) and a wax during the micronization in the jet-mill, polyethylene glycol and wax being fed into the jet-mill at the same time as the Si0₂. The polyethylene glycol concentration in the flatting agent was 7.5% by weight and the wax concentration was 4% by weight. The impregnated flatting agent was incorporated into
a) the same lacquer as in Example 1 a and
b) the same lacquer as in Example 4a.

The results obtained with these lacquers are likewise given in Table 1.

The flatting agent of this Example led to the formation of a voluminous, very soft and easily redispersible sediment.

### Example 7

The polyethylene glycol in Example 6 was replaced by a polyol with 4 OH-groups and a molecular weight of 270. The impregnated flatting agent was again incorporated into
a) the same lacquer as in Example 1 a and
b) the same lacquer as in Example 4a.

The results obtained here are also reproduced in Table 1.

The flatting agent of this Example brought about the formation of a voluminous, very soft and easily redispersible sediment.

### Example 8a

The Si0₂-flatting agent according to Example 3 was incorporated into a non-thixotropic lacquer based on a polyurethane resin. The lacquer composition is reproduced in the following table. It is a representative example for lacquers commonly on the market. The sedimentation behaviour was tested as in Example 4a. The flatting agent treated with polyethylene glycol led to the formation of a hard sediment.

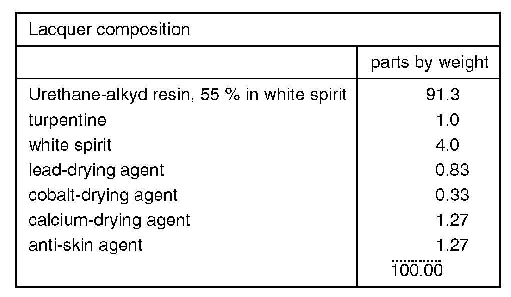

### Example 8b

Instead of the flatting agent according to Example 3, the flatting agent from Example 1 b was tested as described in Example 8a. The formation of a very soft sediment, which was very easily redispersible, was observed.

### Example 9

In this example the Si0₂-flatting agent impregnated with polyethylene glycol and wax was incorporated into the lacquer described in Example 8a and tested in the same manner. This flatting agent led tothe formation of a voluminous, very soft and easily redispersible sediment.

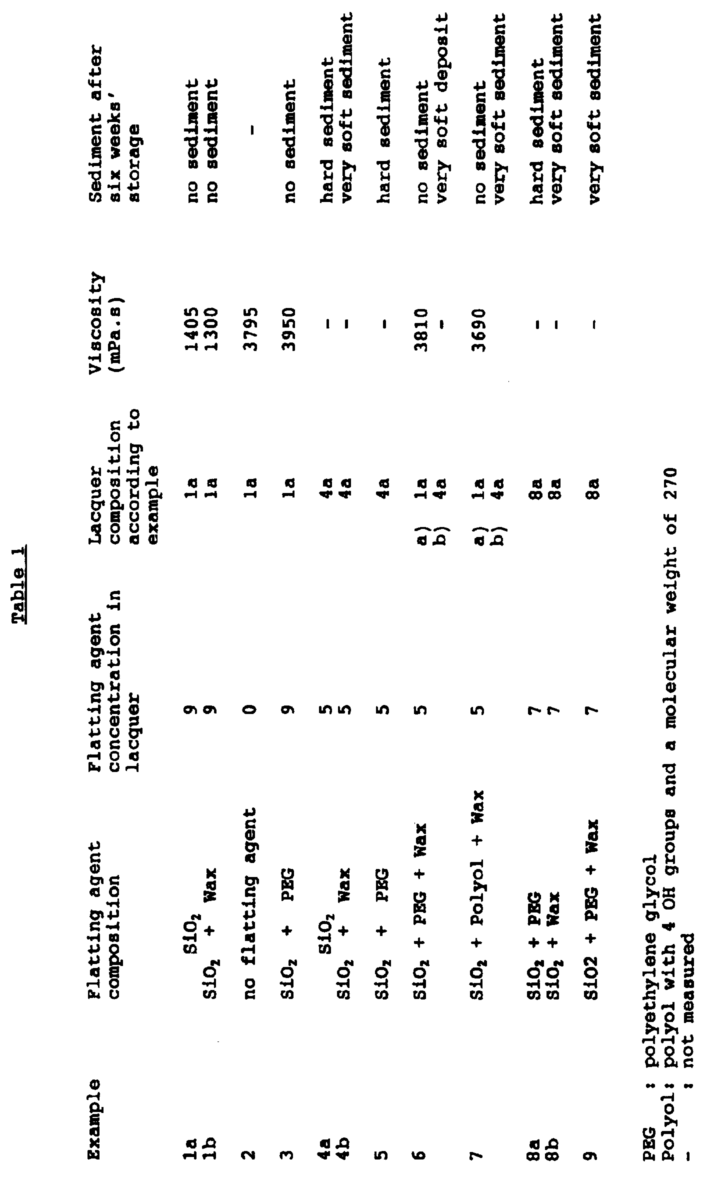

### Example 10

Various flatting agents with two different particle sizes were prepared in the manner described in the foregoing examples. The composition of the flatting agents in each case is given in Table 2. Several bags of the test products were stored together with untreated standard flatting agents for 6 weeks on palettes. Storage was carried out once with and once without an additional load of 200 kg/palette.

After the six weeks storage, 3 samples were taken from different bags. The dispersibility was evaluated according to the standard dispersion test described below. All samples were coded so that the testers were unable to identify the samples. The results are likewise reproduced in Table 2. The effectiveness of the polyol impregnation is especially noticeable for the samples which were previously subjected to a load. Moreover, the test results show that the simultaneous impregnation with wax does not have a negative influence on the positive effect achieved by impregnation with polyol.

### Standard Dispersion Test

Testing was carried out on the lacquer described according to Example 4a.

Before use, the lacquer is set with MIBK to an outflow time of 70-85 seconds (beaker 4mm orifice/DIN 53211 1.5 g flatting agent per 80 g lacquer are shaken with a Red Devil Paint Shaker for 40 seconds in a plastic beaker (diameter 6.5 cm, height 7.0 cm, 190 ml). After deaeration, the samples are briefly agitated once more and drawn on to control cards using a 150 µm drawing spiral under dust-free conditions.

After 10 minutes the control cards are graded against standard cards. Rating 1 signifies that the lacquer coating is completely free of specks The scale extends to 5. Rating 5 characterizes a lacquer coating with very many specks

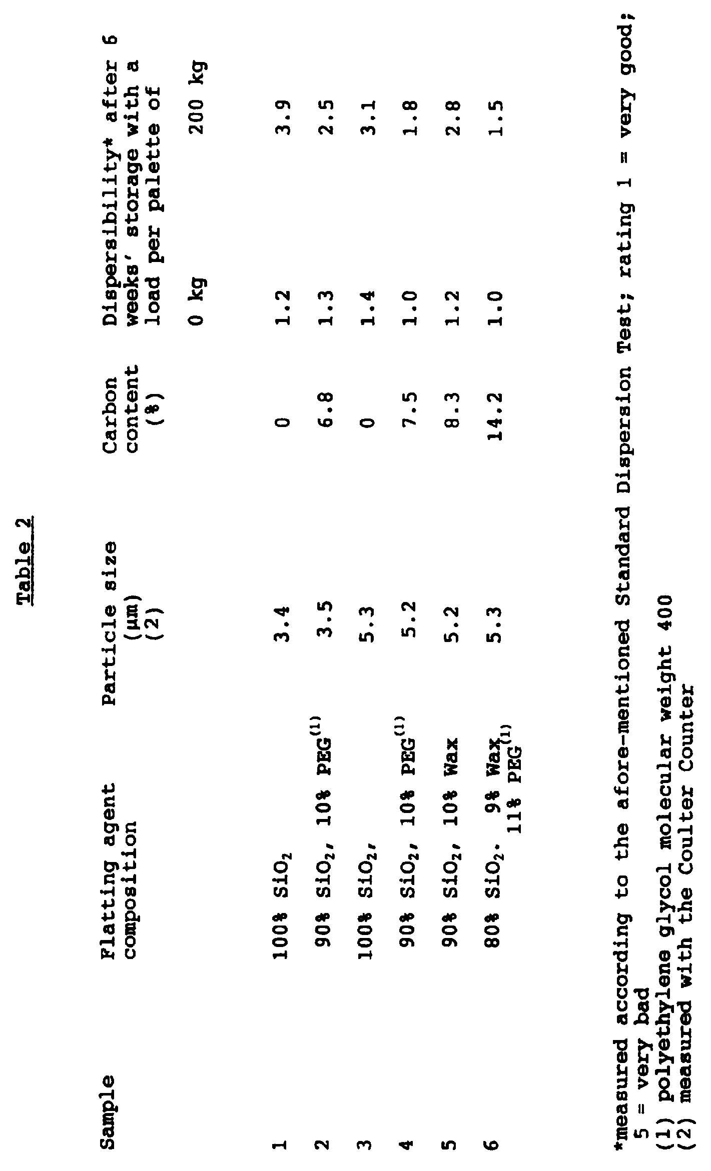

### Example 11

The SiO₂ flatting agent used in Example 1 a was already impregnated with glycerin during the micronization in the jet-mill by adding glycerin into the jet-mill at the same time as the Si0₂. The glycerin concentration in the flatting agent was 11% by weight. The thus impregnated flatting agent was incorporated into the same lacquer as in Example 1a a and tested as described there. The results are reproduced in Table 3.

### Example 12

Example 11 was repeated but with the addition of a polyol with 4 OH-groups and a molecular weight of 270 instead of glycerin during the micronization in the jet-mill. The polyol-concentration in the flatting agent was 12.5% by weight. The mixture was incorporated into the lacquer and tested as in Example 1a. The results are reproduced in Table 3.

### Example 13

Example 1a was repeated but with a polyol with 4 OH-groups and a molecular weight of 270 in a concentration of 1.1% by weight added in dispersion at the same time as 7.9% by weight of Si0₂. The results of the tests are again reproduced in Table 3.

### Example 14

Example 13 was repeated but, instead of the polyol with 4 OH-groups, a polyethylene glycol (molecular weight 400) was used The concentration of the flatting agent, referred to the solids content of the lacquer, was 9% by weight (8.3% by weight Si0₂ + 0.7% by weight polyethylene glycol). The test results are also reproduced in Table 3.

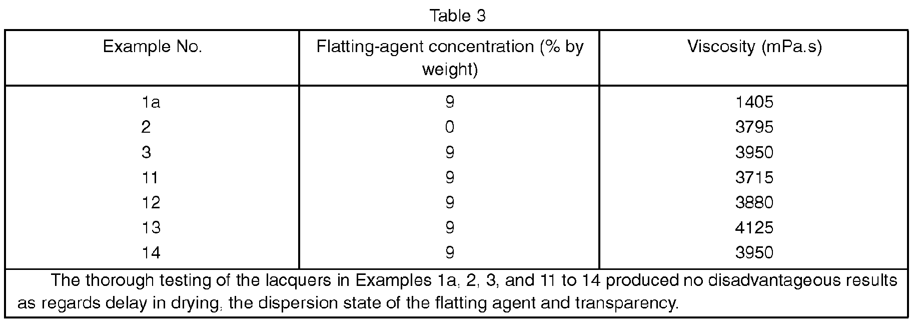

## Claims

1. Use of a Si0₂-flatting agent consisting of SiO₂ and 1 to 25% by weight polyol for the preparation of thixotropic paints and lacquers based on polyamide-modified alkyd resins.

2. Use according to claim 1 wherein the flatting agent further consists of 1 to 25% by weight wax.

3. Use according to claim 1 or 2 wherein the flatting agent contains 3 to 15% by weight polyol.

4. Use according to claim 2 or 3 wherein the flatting agent contains 3 to 10% by weight wax.

5. Use according to any preceeding claim wherein the Si0₂ is silica gel, precipitated silicic acid, pyrogenic or dialytic silicic acid.

6. Use according to claim 1 or 5 wherein the flatting agent is prepared by bringing together Si0₂ with such an amount of polyol that the polyol content of the finished flatting agent is 1 to 25% by weight.

7. Use according to claim 6 wherein the amount of polyol is such that the polyol content of the finished flatting agent is 3 to 15% by weight.

8. Use according to any of claims 2 to 7 wherein the flatting agent is prepared by bringing Si0₂ together with polyol and such an amount of wax that the wax content is 1 to 25% by weight, preferably 3 to 10% by weight.

9. Use according to any preceding claim wherein the flatting agent is prepared by micronizing the Si0₂ in a jet-mill or mechanical mill, if need be with consequent classification, and adding polyol or polyol and wax at the same time as the Si0₂.

10. Use according to claim 1 or 6 wherein the flatting agent is prepared by spray-drying a suspension of Si0₂ in an aqueous polyol solution and adjusting the resulting Si0₂, which is impregnated with polyol, by classification or jet-milling to the suitable particle size distribution.

11. Use according to claim 8 or 10 wherein the flatting agent is prepared by impregnating the polyol-impregnated Si0₂ with wax before adjusting particle size distribution.

12. Use according to claim 8 wherein the flatting agent is prepared by spray-drying a suspension of Si0₂, wax emulsion and polyol.

13. Use according to claims 6 or 7 wherein the flatting agent is prepared by already impregnating the Si0₂ with polyol during washing by adding the polyol to the wash water.

14. Use according to claims 6 or 7 wherein the flatting agent is prepared by already impregnating the SiO₂ with polyol in the hydrogel state by adding the polyol to the liquid phase surrounding the hydrogel, or in the hydrosol state by adding the polyol to the waterglass or the diluted sulphuric acid during the precipitation of the Si0₂.

15. Use according to any of claims 1 to 4 wherein Si0₂ or wax-impregnated Si0₂ and polyol are introduced into the paint or the lacquer as separate components, or Si0₂ or wax-impregnated Si0₂ and polyol are brought together first, and then the resulting product is incorporated into the paint or the lacquer.

16. Si0₂-flatting agent for thixotropic paints and lacquers based on polyamide-modified alkyd resins which consists of Si0₂, 1 to 15% by weight liquid polyol with 2 to 6 OH-groups and 2 to 100 carbon atoms, and 1 to 25% by weight wax

17. Flatting agent according to claim 16 which contains 3 to 15% by weight polyol.

18. Flatting agent according to claim 16 or 17 which contains 3 to 10% by wax.

## Patentansprüche

1. Verwendung eines Si0₂-Mattierungsmittels bestehend aus Si0₂, und 1 bis 25 Gew.% Polyol zur Herstellung von thixotropen, auf Polyamid-modifizierten Alkydharzen basierenden Farben und Lacken.

2. Verwendung nach Anspruch 1, bei der das Mattierungsmittel außerdem aus 1 bis 25 Gew.% Wachs besteht.

3. Verwendung nach Anspruch 1 oder 2, bei der das Si0₂-Mattierungsmittel 3 bis 15 Gew.% Polyol enthält.

4. Verwendung nach Anspruch 2 oder 3, bei der das Mattierungsmittel 3 bis 10 Gew.% Wachs enthält.

5. Verwendung nach einem der vorhergehenden Ansprüche, bei der das Si0₂ Kieselgel, Fällungskieselsäure, pyrogene oder dialytische Kieselsäure ist.

6. Verwendung nach Anspruch 1 oder 5, bei der das Si0₂- Mattierungsmittel hergestellt worden ist, indem Si0₂ mit einer solchen Menge Polyol zusammengebracht worden ist, daß der Polyolgehalt des fertigen Mattierungsmittels 1 bis 25 Gew.% beträgt.

7. Verwendung nach Anspruch 6, bei der die Menge Polyol eine solche Menge ist, daß der Polyolgehalt des fertigen Mattierungsmittels 3 bis 15 Gew.% beträgt.

8. Verwendung nach einem der Ansprüche 2 bis 7, bei der das Mattierungsmittel hergestellt worden ist, indem Si0₂ mit Polyol und einer solchen Menge Wachs zusammengebracht worden ist, daß der Wachsgehalt 1 bis 25 Gew. % und vorzugsweise 3 bis 10 Gew.% beträgt.

9. Verwendung nach einem der vorhergehenden Ansprüche, bei der das Mattierungsmittel hergestellt worden ist, indem Si0₂ in einer Strahlmühle oder mechanischen Mühle mikronisiert wordedn ist, falls erforderlich mit nachfolgender Sichtung, und gleichzeitig mit dem Si0₂ Polyol oder Polyol und Wachs zugegeben werden.

10. Verwendung nach Anspruch 1 oder 6, bei der das Mattierungsmittel hergestellt worden ist, indem eine Suspension von Si0₂ in einer wäßrigen Polyollösung sprühgetrocknet worden ist und das resultierende mit Polyol imprägnierte Si0₂ durch Sichtung oder Strahlmahlung auf die geeigneten Teilchengrößenverteilung eingestellt worden ist.

11. Verwendung nach Anspruch 8 oder 10, bei der das Mattierungsmittel hergestellt worden ist, indem das mit Polyol imprägnierte Si0₂ vor dem Einstellen der Teilchengrößenverteilung mit Wachs imprägniert worden ist.

12. Verwendung nach Anspruch 8, bei der das Mattierungsmittel hergestellt worden ist, indem eine Supsension aus Si0₂, Wachsemulsion und Polyol sprühgetrocknet worden ist.

13. Verwendung nach Anspruch 6 oder 7, bei der das Mattierungsmittel hergestellt worden ist, indem das Si0₂ bereits bei der Waschung mit Polyol imprägniert worden ist, indem das Polyol dem Waschwasser zugesetzt wurde.

14. Verwendung nach Anspruch 6 oder 7, bei der das Mattierungsmittel hergestellt worden ist, indem das Si0₂ bereits im Hydrogelzustand mit Polyol imprägniert worden ist, indem das Polyol der das Hydrogel umgebenden flüssigen Phase zugesetzt wurde, oder im Hydrosolzustand mit Polyol imprägniert worden ist, indem das Polyol zu dem Wasserglas oder der verdünnten Schwefelsäure während der Ausfällung des Si0₂ gegeben wurde.

15. Verwendung nach einem der Ansprüche 1 bis 4, bei der Si0₂ oder mit Wachs imprägniertes Si0₂ und Polyol als separate Komponenten in die Farbe oder den Lack eingebracht werden, oder Si0₂ oder mit Wachs imprägniertes Si0₂ und Polyol zuerst zusammengebracht werden und dann das resultierende Produkt in die Farbe oder den Lack eingebracht wird.

16. Si02-Mattierungsmittel für thixotrope, auf polyamid-modifizierten Alkydharzen basierende Farben und Lacke, das aus Si0₂, 1 bis 15 Gew.% flüssigem Polyol mit 2 bis 6 OH-Gruppen und 2 bis 100 Kohlenstoffatomen und 1 bis 25 Gew.% Wachs besteht.

17. Mattierungsmittel nach Anspruch 16, das 3 bis 15 Gew.% Polyol enthält.

18. Mattierungsmittel nach Anspruch 16 oder 17, das 3 bis 10 Gew.% Wachs enthält.

## Revendications

1. Utilisation d'un agent de matité-Si0₂, composé de Si0₂ et de 1 à 25% en poids de polyol, pour la préparation de peintures et de laques thixotropes, à base de résines alkydes modifiées par un polyamide.

2. Utilisation suivant la revendication 1, dans laquelle l'agent de matité se compose, en outre, de 1 à 25% en poids de cire.

3. Utilisation suivant la revendication 1 ou 2, dans laquelle l'agent de matité contient de 3 à 15% en poids de polyol.

4. Utilisation suivant la revendication 2 ou 3, dans laquelle l'agent de matité contient de 3 à 10% en poids de cire.

5. Utilisation suivant l'une quelconque des revendications précédentes, dans laquelle le Si0₂ est du gel de silice, de l'acide silicique précipité, de l'acide silicique pyrogénique ou dialytique.

6. Utilisation suivant la revendication 1 ou 5, dans laquelle l'agent de matité est préparé par mise en présence du Si0₂ avec une quantité de polyol telle que la teneur en polyol dans l'agent de matité fini soit de 1 à 25% en poids.

7. Utilisation suivant la revendication 6, dans laquelle la quantité de polyol est telle que la teneur en polyol dans l'agent de matité fini soit de 3 à 15% en poids.

8. Utilisation suivant l'une quelconque des revendications 2 à 7, dans laquelle l'agent de matité est préparé par mise en présence de Si0₂ avec le polyol et une quantité de cire telle que la teneur en cire soit de 1 à 25% en poids, de préférence de 3 à 10% en poids

9. Utilisation suivant l'une quelconque des revendications précédentes, dans laquelle l'agent de matité est préparé par micronisation du Si0₂ dans un microniseur ou un moulin mécanique, si nécessaire, suivie d'une classification, et addition du polyol ou du polyol et de la cire en même temps que le Si0₂.

10. Utilisation suivant la revendication 1 ou 6, dans laquelle l'agent de matité est préparé par séchage par atomisation d'une suspension du Si0₂ dans une solution aqueuse du polyol et ajustage du Si0₂ résultant qui est imprégné du polyol, par classification ou micronisation à la distribution particulaire appropriée.

11. Utilisation suivant la revendication 8 ou 10, dans laquelle l'agent de matité est préparé par imprégnation du SiO₂ imprégné du polyol avec la cire, avant ajustage de la distribution particulaire.

12. Utilisation suivant la revendication 8, dans laquelle l'agent de matité est préparé par séchage par atomisation d'une suspension de Si0₂, d'émulsion de cire et du polyol.

13. Utilisation suivant la revendication 6 ou 7, dans laquelle l'agent de matité est préparé par imprégnation du Si0₂ par le polyol déjà pendant le lavage, par addition du polyol à l'eau de lavage.

14. Utilisation suivant la revendication 6 ou 7, dans laquelle l'agent de matité est préparé par imprégnation du Si0₂ par le polyol à l'état d'hydrogel, par addition du polyol à la phase liquide entourant l'hydrogel, ou à l'état d'hydrosol, par addition du polyol au verre soluble ou à l'acide sulfurique dilué pendant la précipitation du Si0₂.

15. Utilisation suivant l'une quelconque des revendications 1 à 4, dans laquelle le Si0₂ ou le Si0₂ imprégné de cire et le polyol sont introduits dans la peinture ou la laque sous forme de composants séparés, ou le SiO₂ ou le Si0₂ imprégné de cire et le polyol sont d'abord mis en commun et ensuite, le produit résultant est incorporé à la peinture ou à la laque.

16. Agent de matité pour peintures et laques thixotropes à base de résines alkydes modifiées par un polyamide, qui consiste en du Si0₂, 1 à 15% en poids de polyol liquide avec 2 à 6 radicaux OH et 2 à 100 atomes de carbone et 1 à 25% en poids de cire.

17. Agent de matité suivant la revendication 16, qui contient de 3 à 15% en poids de polyol.

18. Agent de matité suivant la revendication 16 ou 17, qui contient de 3 à 10% en poids de cire.
